(19) Europäisches Patentamt
European Patent Office
Office européen des brevets

(11) Veröffentlichungsnummer: **0 064 721**
**B1**

# (12) EUROPÄISCHE PATENTSCHRIFT

(45) Veröffentlichungstag der Patentschrift: **09.01.85**

(51) Int. Cl.⁴: **C 09 B 62/085**, C 09 B 62/51, D 06 P 3/66, D 06 P 3/10

(21) Anmeldenummer: **82103793.4**

(22) Anmeldetag: **04.05.82**

## (54) Monoazoverbindungen, Verfahren zu ihrer Herstellung und ihre Verwendung als Farbstoffe.

(30) Priorität: **07.05.81 DE 3118074**

(43) Veröffentlichungstag der Anmeldung: **17.11.82 Patentblatt 82/46**

(45) Bekanntmachung des Hinweises auf die Patenterteilung: **09.01.85 Patentblatt 85/02**

(84) Benannte Vertragsstaaten: **CH DE FR GB IT LI**

(56) Entgegenhaltungen:
**DE-B- 1 265 698**
**CHEMICAL ABSTRACTS, Band 96, Nr. 8, Februar 1982, Seite 82, Nr. 53755p, Columbus, Ohio, USA**
**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT**
**Postfach 80 03 20**
**D-6230 Frankfurt am Main 80 (DE)**

(72) Erfinder: **Meininger, Fritz, Dr.**
**Loreleistrasse 7**
**D-6230 Frankfurt am Main 80 (DE)**
Erfinder: **Otten, Joachim, Dr.**
**verstorben (DE)**

**EP 0 064 721 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Farbstoffe.

« In der deutschen Auslegeschrift Nr. 1 265 698 sind in den Beispielen 2, 4 und 8 Monoazofarbstoffe beschrieben, deren Konstitution den nachfolgend beschriebenen erfindungsgemäßen Monoazoverbindungen der allgemeinen Formel (1) gleicht, die jedoch anstelle der Vinylsulfonylgruppe eine β-Sulfatoethylsulfonyl-Gruppe besitzen. Diese bekannten Farstoffe weisen jedoch Mängel in der alkalischen Schweißechtheit ihrer Wollfärbungen auf. »

Es wurden nunmehr neue, wertvolle, wasserlösliche Azoverbindungen entsprechend der allgemeinen Formel (1)

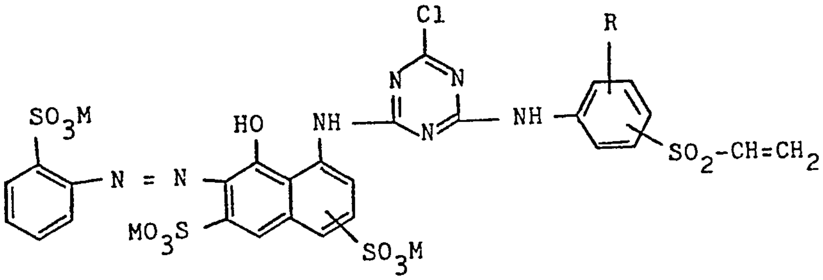
(1)

gefunden, in welcher

M für ein Wasserstoffatom oder das Äquivalent eines Metalls, wie insbesondere eines Alkali- oder Erdalkalimetalls, wie beispielsweise des Natriums, Kaliums, Lithiums und Calciums, steht,

R ein Wasserstoffatom oder die Methyl-, Ethyl-, Methoxy- oder Ethoxygruppe ist und die Vinylsulfonylgruppe im Benzolkern in meta- oder para-Stellung zur acylierten Aminogruppe steht sowie die zweite Gruppe der Formel —$SO_3M$ im Naphthalinkern in meta- oder para-Stellung zur acylierten Aminogruppe gebunden ist.

Die neuen Azoverbindungen können sowohl in saurer Form als auch in Form ihrer Salze vorliegen. Bevorzugt sind sie in Form der Salze, insbesondere der Alkali- und Erdalkalimetallsalze, und finden auch bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialien, insbesondere Fasermaterialien.

Die vorliegende Erfindung betrifft weiterhin Verfahren zur Herstellung der obengenannten und definierten Azoverbindungen der allgemeinen Formel (1). Sie lassen sich beispielsweise erfindungsgemäß herstellen, indem man eine Verbindung der allgemeinen Formel (2)

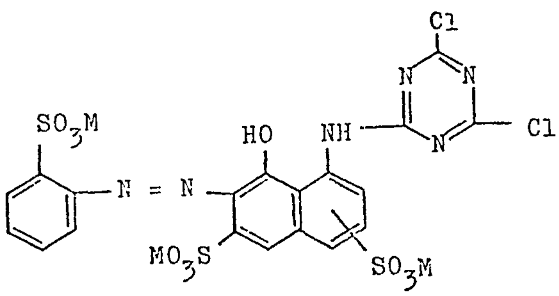
(2)

in welcher M die obengenannte Bedeutung besitzt und die zweite Gruppe der Formel —$SO_3M$ im Naphthalinkern in meta- oder para-Stellung zur acylierten Aminogruppe steht, mit einem aromatischen Amin der allgemeinen Formel (3)

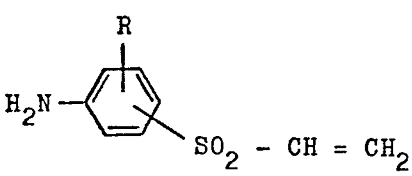
(3)

in welcher R die obengenannte Bedeutung hat und die Vinylsulfonylgruppe im Benzolkern in meta- oder para-Stellung zur Aminogruppe gebunden ist, umsetzt oder daß man eine Azoverbindung der allgemeinen Formel (4)

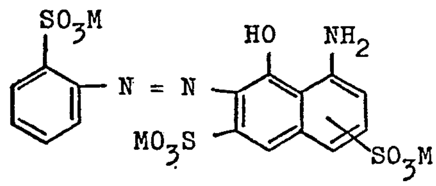

(4)

in welcher M die obengenannte Bedeutung besitzt und die zweite Gruppe der Formel —$SO_3M$ im Naphthalinkern in meta- oder para-Stellung zur acylierten Aminogruppe gebunden ist, mit einer Dichlortriazinylverbindung der allgemeinen Formel (5)

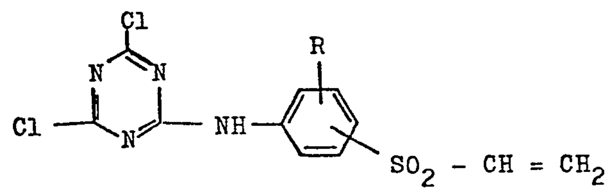

(5)

in welcher R die obigen Bedeutungen besitzt und die Vinylsulfonylgruppe im Benzolkern in meta- oder para-Stellung zur acylierten Aminogruppe gebunden ist, umsetzt.

Die Dichlortriazinylaminoverbindung der allgemeinen Formel (2) läßt sich analog bekannter Verfahrensweise durch Kupplung des Diazoniumsalzes der Anilin-2-sulfonsäure mit 1-(2',4'-Dichlor-1',3',5'-triazin-6'-yl)-amino-8-hydroxynaphthalin-3,6- oder -4,6-disulfonsäure herstellen. Die Herstellung der Azoverbindung der allgemeinen Formel (4) kann analog bekannter Verfahrensweise durch Kupplung der Diazoniumverbindung der Anilin-2-sulfonsäure mit 1-Acetylamino-8-naphthol-3,6- oder -4,6-disulfonsäure und anschließender saurer oder alkalischer Hydrolyse der Acetylaminogruppe zur Aminoazoverbindung erfolgen. Diese Aminoazoverbindung der allgemeinen Formel (4) kann analog bekannter Verfahrensweise in äquimolarer Menge mit Trichlortriazin (Cyanurchlorid) zur Dichlortriazinylamino-Azoverbindung der allgemeinen Formel (2) umgesetzt werden. Ebenfalls kann die Umsetzung der Dichlortriazinylverbindungen der allgemeinen Formeln (2) und (5) mit den entsprechenden Aminoverbingungen analog bekannter Verfahrensweise erfolgen. Diese Reaktionen sind beispielsweise in W. F. Beech, Fibrereactive Dyes, London 1970, Seiten 148 ff., beschrieben. Die oben erwähnten Kupplungsreaktionen erfolgen bevorzugt in einem pH-Bereich zwischen 4 und 7 bei einer Temperatur zwischen 0 °C und 30 °C. Die Kondensationsreaktionen der Dichlortriazinylverbindungen mit den Aminoverbindungen werden in der Regel im wäßrigen Medium, gegebenenfalls unter Mitverwendung eines organischen Lösemittels, bei einer Temperatur zwischen 0 °C und 70 °C, vorzugsweise zwischen 20 °C und 70 °C, und bei einem pH-Wert von vorzugweise zwischen 4 und 7, durchgeführt.

Die bei den Kondensationsreaktionen freiwerdende Chlorwasserstoffsäure wird mittels säurebindender Mittel, wie beispielsweise Natrium- oder Kaliumhydroxid, Natrium- oder Kaliumcarbonat, Natrium- oder Kaliumbicarbonat, Natriumacetat oder einem basischen Natriumphosphat gebunden.

Die erfindungsgemäßen Verbindungen der allgemeinen Formel (1) lassen sich erfindungsgemäß auch in der Weise herstellen, daß man eine Verbindung der allgemeinen Formel (6)

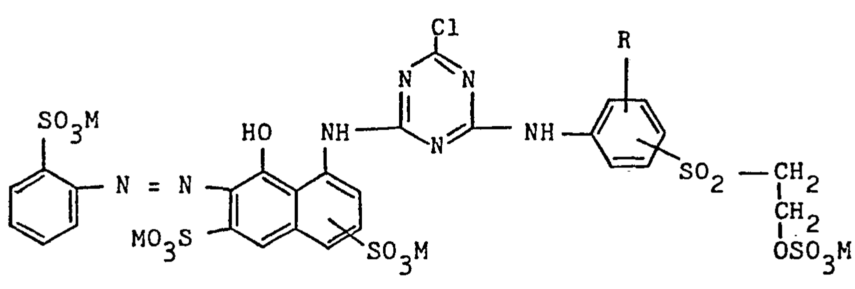

(6)

mit R und M der obengenannten Bedeutung im neutralen bis schwach alkalischen, wäßrigen Medium bei einem pH-Wert zwischen 7 und 8,5 und bei einer Temperatur zwischen 30 und 45 °C vorsichtig mit einem säurebindenden Mittel, wie beispielsweise Natriumcarbonat oder Natronlauge, behandelt. Die Überführung der Schwefelsäureesterverbindungen der Formel (6) in die erfindungsgemäßen Vinylverbindungen der allgemeinen Formel (1) kann erfindungsgemäß auch so erfolgen, daß man nach der Synthese der Verbindungen der Formel (6) deren Syntheselösung mit der äquivalenten Menge eines säurebindenden Mittels versetzt und diese Syntheselösung eindampft, wie beispielsweise einer Sprühtrocknung unterwirft.

Die Abscheidung der erfindungsgemäß hergestellten Verbindungen der allgemeinen Formel (1) aus der Syntheselösung kann nach allgemein bekannter Methoden erfolgen, so beispielsweise entweder

durch Ausfällen aus dem Reaktionsmedium mittels Elektrolyten, wie beispielsweise Natriumchlorid oder Kaliumchlorid, oder, wie bereits für eine Variante der erfindungsgemäßen Synthese erwähnt, durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz, gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und ramifasern ; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyyamid-6, Polyamid-11 und Polyamid-4.

Die erfindungsgemäßen Verbindungen der allgemeinen Formel (1) lassen sich auf den gennannten Substraten, insbesondere auf den genannten Fasermaterialien, nach den für wasserlösliche, insbesondere nach den für wasserlösliche faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 60 und 105 °C, gegebenenfalls bei Temperaturen bis zu 120 °C unter Druck und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig beispielsweise durch Bedrucken mit einer Natriumbicarbonat oder ein anderes säurebindendes Mittel enthaltenden Druckpaste und anschließendes Dämpfen bei 100 bis 103 °C, oder zweiphasig beispielsweise durch Bedrucken mit neutraler oder schwach saurer Druckfarbe und anschlißendem Fixieren durch Hindurchführen des bedruckten Materials durch ein heißes elektrolythaltiges alkalisches Bad oder durch Überklotzen des bedrukten Materials mit einer alkalischen elektrolythaltigen Klotzflotte und anschließendes Verweilen oder Dämpfen oder Behandlung mit Trockenhitze dieses überklotzten Materials durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Verbindung der Formel (1) auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittesltarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der erfindungsgemäßen Verbindungen mit den säurebindenden Mitteln, gegebenenfalls unter Wärmeeinwirkung, werden die erfindungsgemäßen Verbindungen (Farbstoffe) chemisch an die Cellulosefaser gebunden ; sie zeichnen sich auf diesem Fasermaterial bei Anwendung in den Färbeund Druckverfahren durch eine hohe Fixierausbeute aus. Die Cellulosefärbungen zeigen nach der üblichen Nachbehandlung durch Spülen zur Entfernung von nicht fixierten Farbstoffanteilen

ausgezeichnete Naßechtheiten, zumal sich nicht fixierte farbstoffanteile leicht wegen ihrer guten Kalwasserlöslichkeit auswaschen lassen.

Die Färbungen auf Polyurethan- und Polyamidfasern werden üblicherweise aus saurem Milieu ausgeführt. So kann man beispielsweise dem Färbedad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der 3-fach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der regel wird das zu färbende Material bei einer Temperatur von etwa 40 °C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden.

Die mit den erfindungsgemäßen Verbindungen der allgemeinen Formel (1) hergestelleten Färbungen und Drucke zeichnen sich durch sehr klare Nuancen aus. Insbesondere besitzen die Färbungen und Drucke auf Cellulosefasermaterialien eine gute Lichtechtheit und sehr gute Naßechtheiten, wie Wasch-, Walk-, Wasser, Seewasser-, Überfärbe- und Schweißechtheiten, desweiteren eine gute Plissierechtheit, Bügelechtheit und Reibechtheit. Insbesondere können die alkalische Schweißechtheit und die Waschechtheit hervorgehoben werden.

Von besondere Bedeutung ist die erfindungsgemäße Verwendung der Verbindungen der allgemeinen Formel (1) auch für das faserreaktive Färben von Wolle. Insbesondere läßt sich auch filzfrei oder filzarm ausgerüstete Wolle (vgl. bspw. H. Rath, Lehrbuch der Textilchemie, Springer-Verlag, 3. Auflage (1972), S. 295-299, insbesondere die Ausrüstung nach dem sogenannten Hercosett-Verfahren (S. 298) ; J. Soc. Dyers and Colourists (*1972*, 93-99, und *1975*, 33-44) mit sehr guten Echtheitseigenschaften färben.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad mit einem pH von etwa 3,5 bis 5,5 unter Kontrolle des pH-Wertes dem Ausziehprozeß unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungten werden bei temperaturen von 60 bis 100 °C durchgeführt, jedoch können sie auch in geschlossenen Färbeapparaturen bei Temperaturen bis zu 106 °C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemäßen Verbindungen der allgemeinen Formel (1) ist sehr hoch. Sie liefern auf den Fasermaterialien, insbesondere beim reaktiven Färben von Wolle, sehr klare, gelbstichig bis blaustichig rote Färbungen. Bei Anwendung von Färbetemperaturen von 100 bis 106 °C ist eine hohe Baderschöpfung festzustellen.

Bei den mit den erfindungsgemäßen Verbindungen der allgemeinen Formel (1) erhältlichen Färbungen kann auf eine ansonsten übliche ammoniakalische Nachbehandlung der gefärbten Ware verzichtet werden. Im Vergleich zu konstitutionell ähnlichen, bekannten Farbstoffen zeigen sie in überraschender Weise einen sehr guten Farbaufbau, wobei die brillante Nuance auch in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso läßt sich Material aus Wollfasern unterschiedlicher Provenienz mit den erfindungsgemäßen Verbindungen egal färben. Zur Verbesserung des Egalisierverhaltens kann gegebenenfalls ein übliches Egalisierhilfsmittel, wie beispielsweise N-Methyltaurin, zugesetzt werden.

Unter Verwendung der üblichen faseraffinen Färbehilfsmittel ergeben die erfindungsgemäßen Verbindungen auch auf filzfrei oder filzarm ausgerüsteter Wolle egale Färbungen. Bei hellen bis mittleren Farbtiefen ist auch ohne ammoniakalische Nachbehandlung ein sehr gutes Naßechtheisniveau zu erzielen, wobei jedoch gegebenenfalls eine ammoniakalische Nachbehandlung bevorzugt werden kann. Neben der hohen Lichtechtheit dieser Wollfärbungen sind als sehr gute Naßechtheitseigenschaften insbesondere die ausgezeichnete alkalische Schweißechtheit und sehr gute Waschechtheit bei 60 °C, auch von Färbungen in hohen Farbtiefen, zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Beispiel 1

a) Unter Rühren werden 319 Teile 1-Amino-8-naphthol-3,6-disulfonsäure als trockne, gemahlene Ware in eine Suspension aus 190 Teilen Cyanurchlorid, 2 000 Teilen Wasser und 400 Teilen Eis

eingetragen. Das Reaktionsgemisch wird noch 3 Stunden weitergerührt, wobei die Temperatur zwischen 12 und 16 °C und der pH-Wert durch Einstreuen von etwa 160 Teilen Natriumbicarbonat zwischen 1,8 und 2,3 gehalten wird. Nach dieser Zeit ist die Umsetzung beendet und kein freies Amin mehr nachweisbar.

b) Getrennt hiervon wird das Diazoniumsalz der Diazokomponente hergestellt :

173 Teile Anilin-2-sulfonsäure werden in 1 800 Teile Eiswasser suspendiert ; 130 Volumenteile konzentrierte wäßrige Salzsäure werden hinzugegeben, und die Diazotierung erfolgt anschließend durch Einrühren von 130 Volumenteilen einer wäßrigen, 40 %igen Natriumnitritlösung bei einer Temperatur zwischen 0 °C und 5 °C. Es wird noch 30 Minuten nachgerührt und überschüssige salpetrige Säure sodann mit wenig Amidosulfonsäure zerstört.

c) Die unter b) hergestellte Diazoniumsalzlösung/-suspension wird zu dem unter a) hergestellten Ansatz, der Dichlortriazinylverbindung, gegeben. Durch Einstreuen von Natriumbicarbonat wird ein pH-Wert von 4 bis 4,5 eingestellt. In diesem pH-Bereich und bei einer Temperatur zwischen 15 und 18 °C wird das Reaktionsgemisch noch 2 Stunden nachgerührt.

d) Getrennt hiervon wird eine Suspension von 4-Vinylsulfonylanilin für die zweite Kondensationsreaktion hergestellt :

300 Teile 4-ß-Sulfatoethylsulfonyl-anilin werden in 2 000 Teilen Wasser unter Zusatz von 105 Teilen Natriumbicarbonat neutral gelöst. Innerhalb von 30 Minuten werden bei 20 °C 30 Volumenteile einer wäßrigen, 33 %igen Natronlauge langsam zugegeben. Der Ansatz wird noch 30 Minuten bei 20 °C nachgerührt.

e) Die unter d) hergestellte Suspension des 4-Vinylsulfonylanilins wird in die unter c) hergestellte Lösung der Dichlortriazinylaminonaphthol-azobenzol-Verbindung eingerührt. Zur Durchführung der Kondensationsreaktion wird dieses Reaktionsgemisch 1 Stunde bei einem pH-Wert zwischen 5 und 5,5 und bei einer Temperatur zwischen 25 und 30 °C gerührt ; danach wird die Reaktionstemperatur innerhalb von 2 Stunden langsam auf 50 °C erhöht, wobei der pH durch Einstreuen von Natriumbicarbonat auf einen Wert 6,0 bis 6,5 gehalten wird. Anschließend läßt man langsam unter Rühren auf Raumtemperatur abkühlen, wobei im Temperaturbereich zwischen 35 und 40 °C 350 Teile Natriumchlorid hinzugefügt werden. Die ausgefallene Verbindung wird abgesaugt, dreimal mit je 500 Volumenteilen einer wäßrigen, 15 %igen Natriumchloridlösung gewaschen und sodann mit 40 Teilen Dinatriumphosphat gut vermischt. Die feuchte Masse wird unter reduziertem Druck bei 60 °C im Trockenschrank getrocknet und anschließend gemahlen. Es werden etwa 1 000 Teile eines elektrolythaltigen (vorwiegend Natriumchlorid) roten Pulvers erhalten, das das Natriumsalz der Verbindung der Formel

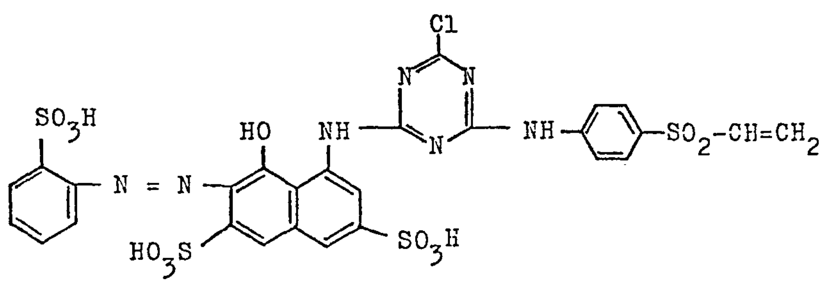

enthält. Diese zeigt sehr gute Farbstoffeigenschaften und liefert nach den in der Technik üblichen Anwendungs- und Fixiermethoden für faserreaktive Farbstoffe beispielsweise auf Wolle, einschließlich filzarm ausgerüsteter Wolle, brillante rote Färbungen und Drucke mit sehr guten Naßechtheitseigenschaften, von denen vor allem die ausgezeichnete alkalische Schweißechtheit und die sehr gute Waschechtheit bei 60 °C hervorgehoben werden kann. Die Färbungen zeichnen sich weiterhin durch hohe Farbtiefen aus.

## Beispiel 2

Man verfährt zur Herstellung einer erfindungsgemäßen Verbindung wie im Beispiel 1 beschrieben, verwendet jedoch in der zweiten Kondensationsstufe gemäß Abschnitt e) anstelle von 4-Vinylsulfonylanilin die gleiche Menge an 3-Vinylsulfonylanilin, das gemäß den Angaben von Beispiel 1d) durch alkalische Behandlung von 300 Teilen 3-β-Sulfatoethylsulonylanilin hergestellt wurde.

Es werden etwa 1 000 Teile eines elektrolythaltigen, roten Pulvers erhalten, das das Natriumsalz der Verbindung der Formel

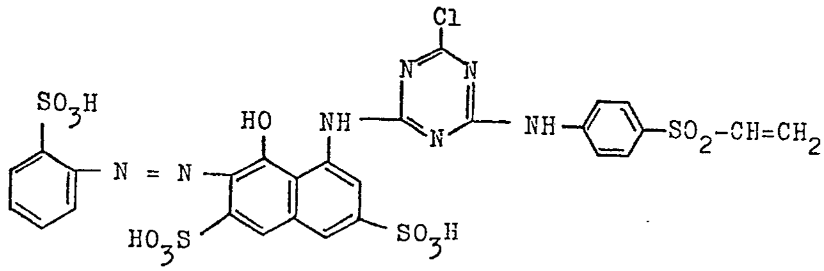

enthält. Diese zeigt sehr gute faserreaktive Farbstoffeigenschaften und färbt nach üblichen und bekannten Methoden beispielsweise Cellulosefasermaterialen und Baumwolle in kräftigen, roten Farbtönen mit guten Echtheiten.

## Beispiel 3

Unter Rühren werden 319 Teile 1-Amino-8-naphthol-4,6-disulfonsäure als trockene, gemahlene Ware in eine Suspension aus 190 Teilen Cyanurchlorid, 2 000 Teilen Wasser und 900 Teilen Eis eingetragen. Das Reaktionsgemisch wird noch 3 Stunden weitergerührt, wobei die Temperatur zwischen 0 °C und 5 °C und der pH des Reaktionsgemisches durch Einstreuen von Natriumbicarbonat oberhalb eines Wertes von 1,8, vorzugsweise bei einem pH-Wert zwischen 2 und 2,5, gehalten wird. Nach dieser Zeit ist die Umsetzung in der ersten Kondensationsstufe beendet und kein freies Amin mehr nachweisbar.

Dieser Ansatz mit der hergestellten Dichlortriazinyl-amino-naphthol-Verbindung wird gemäß der im Beispiel 1b)-e) beschriebenen Verfahrensweise zur erfindungsgemäßen Verbindung der Formel

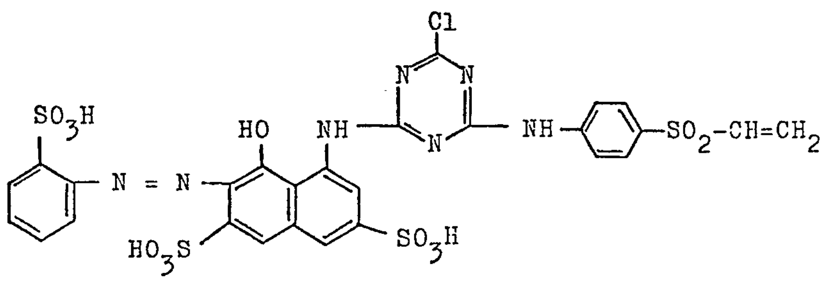

umgesetzt, das in Form des Natriumsalzes isoliert wird. Diese Verbindung zeigt ebenfalls sehr gute faserreaktive Eigenschaften und liefert beispielsweise auf Wolle, einschließlich filzarm ausgerüsteter Wolle, brillante gelbstichig rote Färbungen mit sehr guten Naßechtheiten, von denen insbesondere die ausgezeichnete alkalische Schweißechtheit hervorzuheben ist. Die mit dieser erfindungsgemäßen Verbindung erhältlichen Färbungen zeichnen sich weiterhin durch eine hohe Farbtiefe aus.

## Beispiele 4 bis 9

In den nachfolgenden Tabellenbeispielen sind weitere erfindungsgemäße Verbindungen der allgemeinen Formel (1) in Form der freien Säure beschrieben. Bevorzugt liegen sie als Alkalimetallsalze vor. Sie besitzen ebenfalls sehr gute faserreaktive Farbstoffeigenschaften und färben vorzugsweise Cellulosefasermaterial und insbesondere vorteilhaft Wolle in den angegebenen Farbtönen mit sehr guten Echtheiten. Diese in den Tabellenbeispielen beschriebenen erfindungsgemäßen Azoverbindungen bzw. ihre Salze lassen sich in erfindungsgemäßer Verfahrensweise, beispielsweise analog den in den vorhergehenden Ausführungsbeispielen beschriebenen Methoden, mit den aus den Formeln ersichtlichen Komponenten als Ausgangsverbindungen herstellen.

(Siehe Figuren Seite 8 ff.)

| Bsp. | Verbindung entsprechend der allgemeinen Formel (1) | Farbton auf Wolle |
|---|---|---|
| 4 | 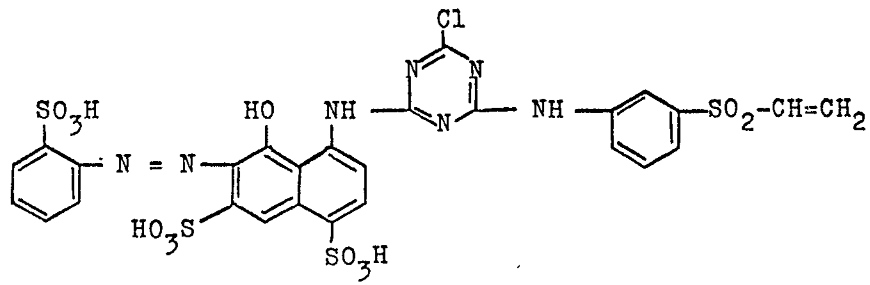 | gelbstichig rot |
| 5 | 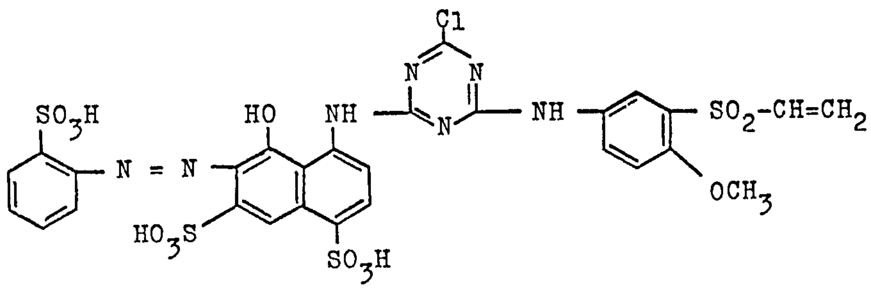 | gelbstichig rot |
| 6 | 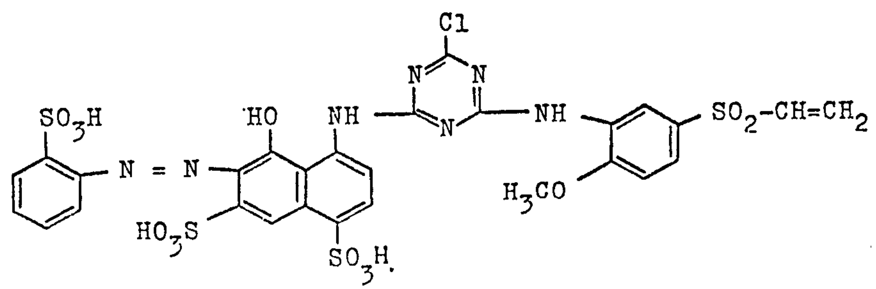 | gelbstichig rot |
| 7 | 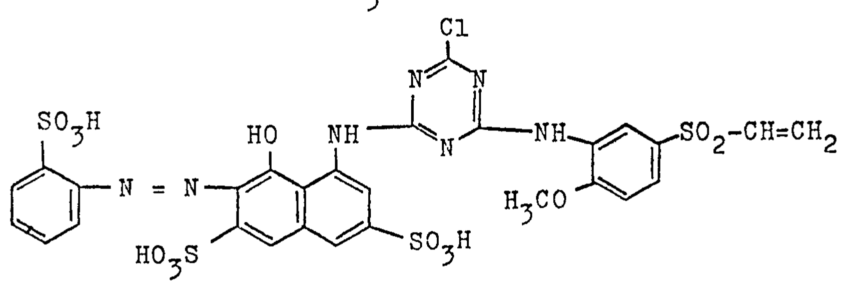 | rot |

| Bsp. | Verbindung entsprechend der allgemeinen Formel (1) | Farbton auf Wolle |
|---|---|---|
| 8 | 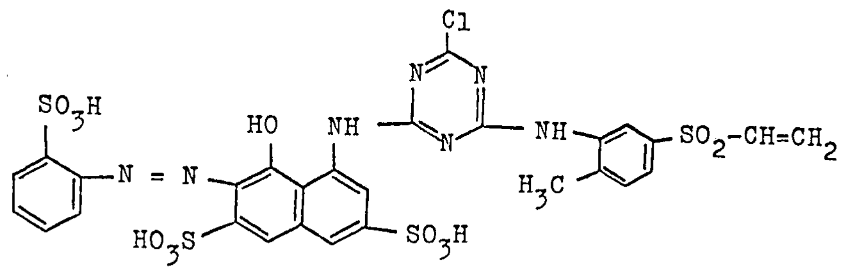 | rot |
| 9 | 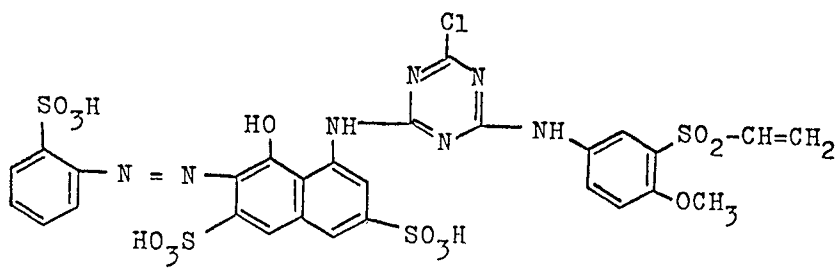 | rot |

Anwendungsbeispiel 1

100 Teile Wollkammzug werden wie üblich vorgewaschen und bei 40 °C in 3 000 Teile eines wäßrigen Färbedabes gebracht, das als Hilfsmittel 1 Teil eines Oxethylierungsproduktes eines Fettamins und 2 Teile Ammoniumacetat enthält. Mittels Essigsäure wird ein pH-Wert zwischen 4,8 und 5,0 eingestellt, und das Substrat wird in diesem Bad 5 Minuten lang behandelt. Sodann gibt man 4 Teile der in Beispiel 1 beschriebenen erfindungsgemäßen Verbindung, in wenig Wasser gelöst, hinzu. Das Färbebad wird innerhalb von 30 Minuten auf Siedetemperatur erhitzt und das Wollmaterial 60 Minuten lang darin bei dieser Temperatur gefärbt. Anschließend wird das Material aus dem Färbebad herausgenommen, in Wasser gespült, sodann in einem wäßrigen, wenig Essigsäure enthaltenden Bad behandelt, wiederum mit Wasser gespült und getrocknet.

Es wird eine Wollfärbung erhalten, die einen brillanten kräftigen Rotton von neutraler Nuance und einwandfreier Egalität zeigt und sehr gute Naßechtheiten, wie vor allem eine sehr gute alkalische Schweißechtheit, aufweist.

Anwendungsbeispiel 2

100 Teile Wollgarn werden wie üblich vorgewaschen und in 3 000 Teile eines 40 °C warmen, wäßrigen Färbebades eingebracht, das 2 Teile Ammoniumacetat enthält und mittels Essigsäure auf einen pH-Wert von 5,5 eingestellt ist. Das Material wird 5 Minuten lang in diesem Bad behandelt. 2 Teile des in Beispiel 1 beschriebenen erfindungsgemäßen Farbstoffes werden, in wenig Wasser gelöst, hinzugegeben. Das Fäbebad wird sodann innerhalb von 30 Minuten auf Siedetemperatur erhitzt und die Ware darin 45 Minuten lang bei dieser Temperatur behandelt. Das Garn wird herausgenommen, mit Wasser, sodann in einem wenig Essigsäure enthaltenden wäßrigen Bad, sodann wiederum mit Wasser gespült und getrocknet.

Es wird ein Wollmaterial mit brillanter Rotnuance und sehr guter Naßechtheit, wie insbesondere ausgezeichnete alkalische Schweißechtheit, erhalten.

Anwendungsbeispiel 3

Man verfährt gemäß der im Anwendungsbeispiel 1 angegebenen Färbeweise, verwendet jedoch als Farbstoff 4 Teile der im Beispiel 2 beschriebenen erfindungsgemäßen Verbindung. Es wird ein tiefgefärbter Wollkammzug mit klarer Rotnuance erhalten ; die Naßechtheiten, insbesondere die alkalische Schweißechtheit, sind ausgezeichnet.

Anwendungsbeispiel 4

100 Teile Wollflocke werden wie üblich vorgewaschen und in 3 000 Teile eines 40 °C warmen wäßrigen Färbebades eingebracht, das 2 Teile Ammoniumacetat enthält und mittels Essigsäure auf einen pH-Wert von 5,5 eingestellt ist. Das Material wird 5 Minuten lang in diesem Bad behandelt ; sodann werden 3 Teile der im Beispiel 2 beschriebenen erfindungsgemäßen Verbindung, in wenig Wasser gelöst, hinzugegeben. Das Färbebad wird innerhalb von 30 Minuten auf Siedetemperatur erhitzt und die Ware 45 Minuten lang bei dieser Temperatur gefärbt. Anschließend wird das Material herausgenommen, mit Wasser, in einem wenig Essigsäure enthaltenden Bad, anschließend wiederum mit Wasser gespült und getrocknet.

Es wird eine egal gefärbte Wollflocke erhalten, die einen klaren Rotton von großer Farbtiefe und von sehr guten Naßechtheiten, vor allem mit einer ausgezeichneten alkalischen Schweißechtheit, besitzt.

Anwendungsbeispiel 5

100 Teile Wollflocke, die nach einem üblichen und bekannten Verfahren filzarm ausgerüstet wurde, wird in 3 000 Teilen eines 40 °C warmen wäßrigen Färbebades eingebracht, das 2 Teile Ammoniumacetat enthält und mittels Essigsäure auf einen pH-Wert von 6 eingestellt ist. Das Material wird 5 Minuten lang in diesem Bad behandelt ; sodann werden 3 Teile der im Beispiel 3 beschriebenen erfindungsgemäßen Verbindung, in wenig Wasser gelöst, hinzugegeben. Das Färbebad wird innerhalb von 30 Minuten auf Siedetemperatur erhitzt und die Ware darin 45 Minuten lang bei dieser Temperatur gefärbt, anschließend herausgenommen, mit Wasser, in einem wenig Essigsäure enthaltenden Bad, sodann wiederum mit Wasser gespült und getrocknet.

Es wird eine Wollflocke mit einer klaren, gelbstichig roten Nuance und von sehr guter Naßechtheit erhalten.

**Ansprüche**

1. Azoverbindungen der allgemeinen Formel (1)

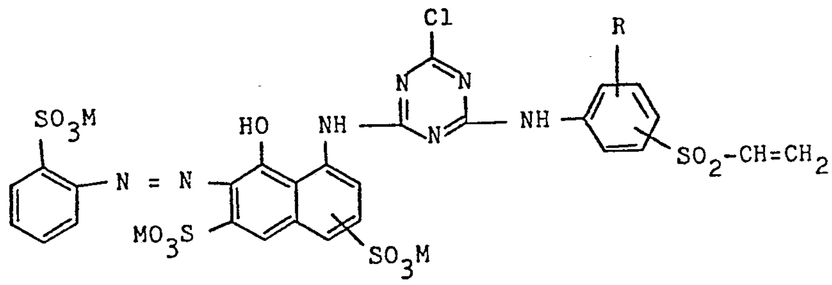

(1)

in welcher

M ein Wasserstoffatom oder das Äquivalent eines Metalls ist,

R ein Wasserstoffatom oder die Methyl-, Ethyl-, Methoxy- oder Ethoxygruppe ist und

die Vinylsulfonylgruppe im Benzolkern in meta- oder para-Stellung zur acylierten Aminogruppe steht sowie die zweite Gruppe der Formel —$SO_3M$ im Naphthalinkern in meta- oder para-Stellung zur acylierten Aminogruppe gebunden ist.

2. Verfahren zur Herstellung der in Anspruch 1 genannten und definierten Verbindungen der allgemeinen Formel (1), dadurch gekennzeichnet, daß man eine Verbindung der allgemeinen Formel (2)

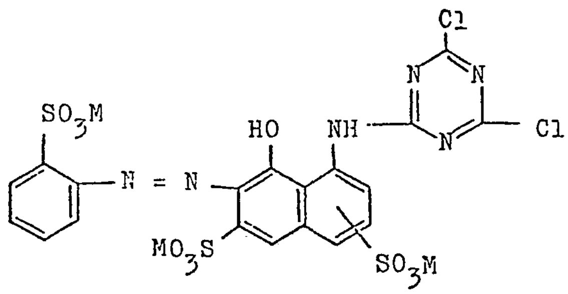

(2)

in welcher M die in Anspruch 1 genannte Bedeutung besitzt und die zweite Gruppe der Formel —$SO_3M$ im Naphthalinkern in meta- oder para-Stellung zur acylierten Aminogruppe steht, mit einem aromastischen Amin der allgemeinen Formel (3)

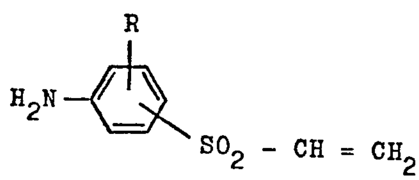

(3)

in welcher R die in Anspruch 1 genannte Bedeutung hat und die Vinylsulfonylgruppe im Benzolkern in meta- oder para-Stellung zur Aminogruppe gebunden ist, umsetzt oder daß man eine Azoverbindung der allgemeinen Formel (4)

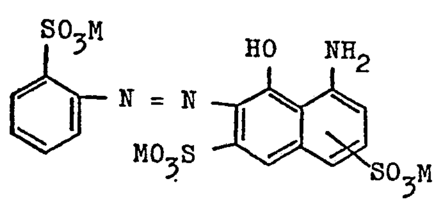

(4)

in welcher M die genannte Bedeutung besitzt und die zweite Gruppe der Formel —$SO_3M$ im Naphthalinkern in meta- oder para-Stellung zur acylierten Aminogruppe gebunden ist, mit einer Dichlortriazinylverbindung der allgemeinen Formel (5)

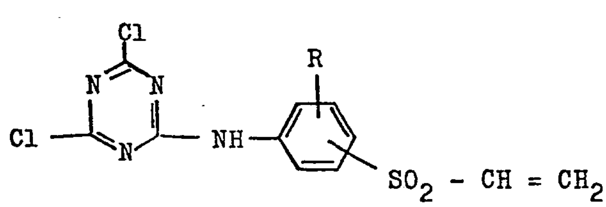

(5)

in welcher R die genannte Bedeutung besitzt und die Vinylsulfonylgruppe im Benzolkern in meta- oder para-Stellung zur acylierten Aminogruppe gebunden ist, umsetzt.

3. Verfahren zur Herstellung der Verbindungen von Anspruch 1, dadurch gekennzeichnet, daß man eine Verbindung der allgemeinen Formel

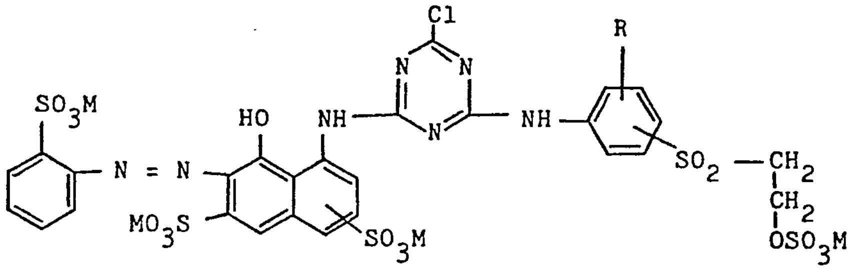

mit R und M der in Anspruch 1 genannten Bedeutung im neutralen bis schwach alkalischen, wäßrigen Medium bei einer Temperatur zwischen 30 und 45 °C mit einem säurebindenden Mittel behandelt oder daß man die Syntheselösung dieser Verbindung mit der äquivalenten Menge eines säurebindenden Mittels versetzt und sodann eindampft, vorzugsweise einer Sprühtrocknung unterwirft.

4. Verwendung der in Anspruch 1 genannten und definierten Verbindungen der allgemeinen Formel (1) zum Färben oder Bedrucken von hydroxy- und/oder carbonamidgruppenhaltigen Materialien, insbesondere Fasern.

5. Materialien aus hydroxy- und/oder carbonamidgruppenhaltigen Fasern, die mit einer Verbindung von Anspruch 1 gefärbt oder bedruckt wurden.

6. Verfahren zum Färben von hydroxy- und/oder carbonamidgruppenhaltigem Material, bei welchem man einen Farbstoff auf das Material aufbringt oder in das Material einbringt und ihn darauf oder gegebenenfalls darin, gegebenenfalls in der Wärme und/oder in Gegenwart eines säurebindenden Mittels, fixiert, dadurch gekennzeichnet daß man als Farbstoff eine Verbindung der in Anspruch 1 genannten und definierten allgemeinen Formel (1) einsetzt.

**Claims**

1. Compounds of the general formula (1)

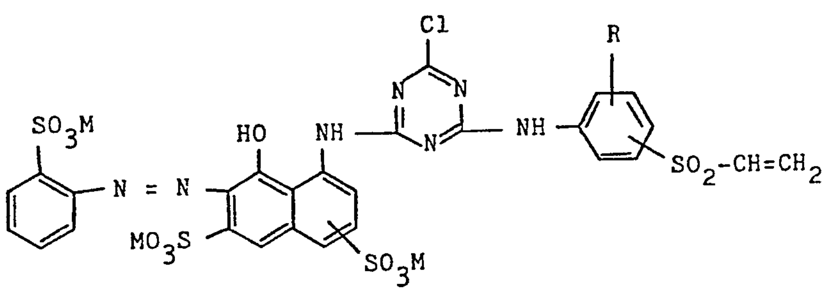

(1)

wherein

M is a hydrogen atom or the equivalent of a metal,

R is a hydrogen atom or the methyl, ethyl, methoxy or ethoxy group, and

the vinylsulfonyl group in the benzene nucleus is in the meta- or para-position relative to the acylated amino group, and the second group of the formula $-SO_3M$ in the naphthalene nucleus is bound in the meta-position relative to the acylated amino group.

2. A process for the manufacture of the compounds of the general formula (1) specified and defined in claim 1, characterized by reacting a compound of the general formula (2)

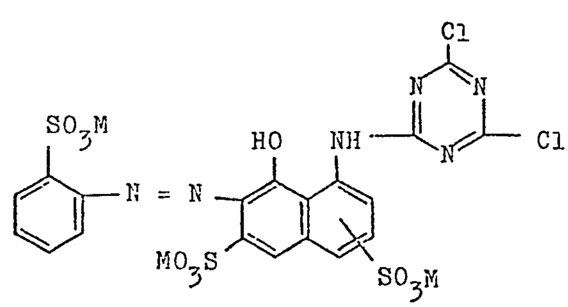

(2)

wherein M is defined as in claim 1 and the second group of the formula —$SO_3M$ in the naphthalene nucleus is in the meta- or para-position relative to the acylated amino group, with an aromatic amine of the general formula (3)

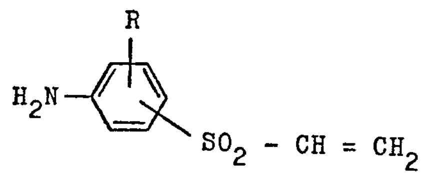
(3)

wherein R is defined as in claim 1 and the vinylsulfonyl group in the benzene nucleus is in the meta- or para-position relative to the amino group, or by reacting an azo compound of the general formula (4)

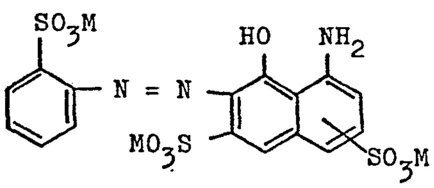
(4)

wherein M. is defined as in claim 1 and the second group of the formula —$SO_3M$ in the naphthalene nucleus is in the meta- or para-position relative to the acylated amino group, with a dichlorotriazinyl compound of the general formula (5)

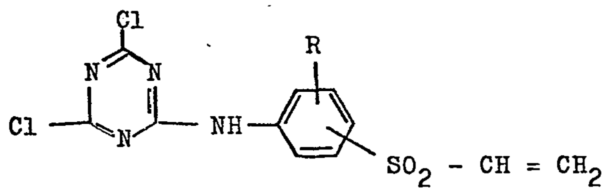
(5)

wherein R is defined as in claim 1 and the vinylsulfonyl group in the benzene nucleus is in the meta- or para-position relative to the acylated amino group.

3. A process for the manufacture of the compounds of claim 1, characterized by treating a compound of the general formula

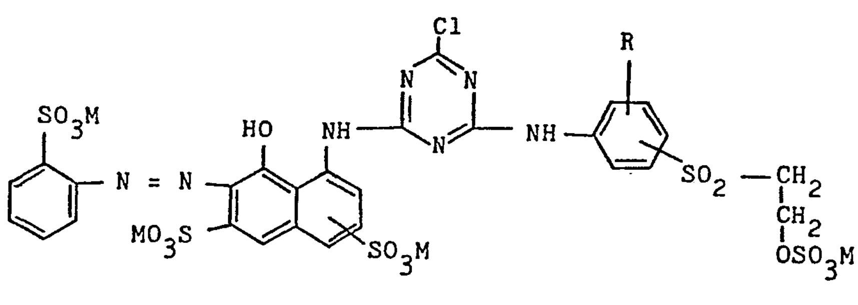

wherein R and M are defined as in claim 1, in a neutral to slightly alkaline aqueous medium at a temperature between 30 and 45 °C with an acid-binding agent, or adding an acid-binding agent in equivalent quantity to the synthesis solution of this compound and then evaporating the solution, preferably spray-drying it.

4. Use of the compounds of the general formula (1) specified and defined in claim 1, for dyeing or printing materials, in particular fibers, containing hydroxy and/or carbonamide groups.

5. Materials made from fibers containing hydroxy and/or carbonamide groups, which have been dyed or printed with a compound of claim 1.

6. A process for coloring a material containing hydroxy and/or carbonamide groups, which comprises applying a dyestuff onto the material or incorporating it into the material and fixing it thereon or optionally therein, optionally with the action of heat and/or in the presence of an acid-binding agent, characterized by that a compound of the general formula (1) as specified and defined in claim 1, is used as the dyestuff.

**Revendications**

1. Composés azoïques de formule générale (1)

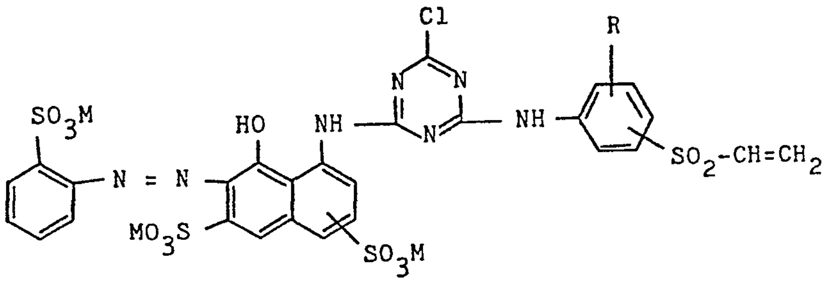

(1)

dans laquelle

M représente un atome d'hydrogène ou l'équivalent d'un métal

R représente un atome d'hydrogène ou le groupe méthyle, éthyle, méthyle ou éthoxy,

et le groupe vinylsulfonyle se trouve dans le noyau benzénique en position méta ou para par rapport au groupe amino acylé, et le second groupe de formule $—SO_3M$ est fixé dans le noyau naphtalénique en position méta ou para par rapport au groupe amino acylé.

2. Procédé de préparation des composés de formule générale (1), cités et définis à la revendication 1, procédé caractérisé en ce qu'on fait réagir un composé de formule générale (2)

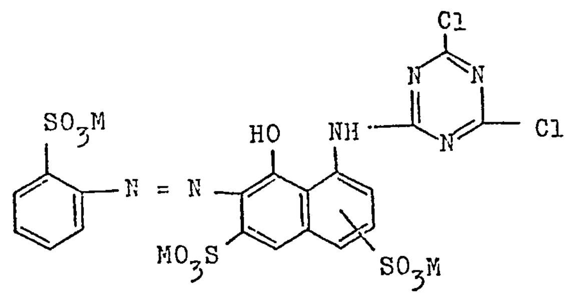

(2)

(dans laquelle M a le sens indiqué à la revendication 1, et le second groupe de formule $—SO_3M$ se trouve dans le noyau naphtalénique en position méta ou para par rapport au groupe amino acylé) avec une amine aromatique de formule générale (3)

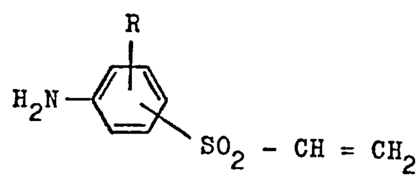

(3)

(dans laquelle R a le sens indiqué à la revendication 1, et le groupe vinylsulfonyle est fixé sur le noyau benzénique en position méta ou para par rapport au groupe amino), ou on fait réagir un composé azoïque de formule générale (4)

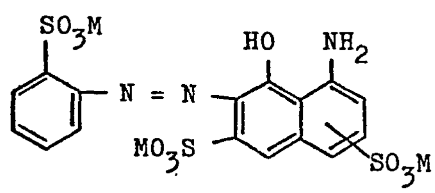

(4)

(dans laquelle M a le sens indiqué et le second groupe de formule $—SO_3M$ est fixé sur le noyau naphtalénique en position méta ou para par rapport au groupe amino acylé) avec un composé dichlorotriazinylique de formule générale (5)

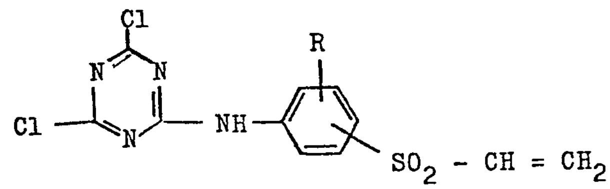
(5)

(dans laquelle R a le sens indiqué et le groupe vinylsulfonyle est fixé sur le noyau benzénique en position méta ou para par rapport au groupe amino acylé).

3. Procédé de préparation des composés selon la revendication 1, composé caractérisé en ce qu'on traite un composé de formule générale

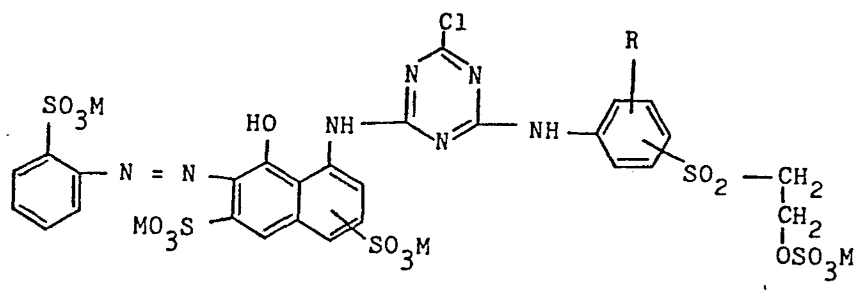

(dans laquelle R et M ont le sens indiqué dans la revendication 1), en milieu aqueux neutre à faiblement alcalin, à une température entre 30 et 45 °C, par un agent de fixation des acides ou bien on ajoute, à la solution de synthèse de ce composé, la quantité équivalente d'un agent de fixation des acides puis on concentre par évaporation, en soumettant de préférence à un séchage par atomisation.

4. Utilisation des composés de formule générale (1) cités et définis à la revendications 1, pour teindre ou imprimer des matières, en particulier des fibres, contenant des groupes hydroxyles et/ou carboxamides.

5. Matières en fibres contenant des groupes hydroxyle et/ou carboxamide, qui ont été teintes ou imprimées à l'aide d'un composé selon la revendication 1.

6. Procédé pour teindre de la matière contenant des groupes hydroxyle et/ou carboxamides, procédé selon lequel on applique un colorant sur la matière ou on l'introduit dans la matière et on fixe ce colorant sur ou éventuellement dans la matière, éventuellement à chaud et/ou en présence d'un agent de fixation des acides, procédé caractérisé en ce qu'on utilise comme colorant un composé de formule générale (1) citée et définie à la revendication 1.